# FASCICULE DE BREVET EUROPEEN

(11) **EP 3 484 723 B1**
(45) Date de publication et mention de la délivrance du brevet: **19.01.2022**
(21) Numéro de dépôt: 17748531.5
(22) Date de dépôt: 11.07.2017
(51) Int. Cl.: B60C 15/00, B60C 15/06

(54) **PNEUMATIQUE**
LUFTREIFEN
PNEUMATIC TIRE

(30) Priorité: 12.07.2016 FR 1656655
(43) Date de publication de la demande: 22.05.2019
(73) Titulaire: Compagnie Générale des Etablissements Michelin, 63000 Clermont-Ferrand (FR)
(72) Inventeur: JOULIN, Emmanuel, 63040 Clermont-Ferrand Cedex 9 (FR); LICENSE, William, 63040 Clermont-Ferrand Cedex 9 (FR)
(74) Mandataire: Le Cam, Stéphane Georges Elie
(86) Numéro de dépôt international: PCT/FR2017/051890
(87) Numéro de publication internationale: WO 2018/011507

(56) Documents cités:
- EP-A1- 1 162 087
- EP-A1- 3 031 630
- WO-A1-2009/092648

## Description

La présente invention concerne un pneumatique, à armature de carcasse radiale, constituée de deux couches d'éléments de renforcement.

Bien que non limitée à ce type d'applications, l'invention sera plus particulièrement décrite en référence à un pneumatique destiné à équiper des véhicules de type petits poids-lourds (« light truck » en anglais), tels que, par exemple des camions ou des camionnettes. Plus spécifiquement encore, l'invention sera décrite en référence à un pneumatique destiné à équiper des véhicules de type petits poids-lourds destinés à être montés sur des jantes de diamètres supérieurs ou égaux à 17 pouces et dont la pression d'utilisation est supérieure ou égale à 6 bars.

D'une manière générale dans les pneumatiques de type petit poids-lourds, l'armature de carcasse est ancrée de part et d'autre dans la zone du bourrelet et est surmontée radialement par une armature de sommet.

Pour ce type de pneumatique, l'armature carcasse est usuellement constituée d'une couche d'éléments de renforcement métalliques.

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

La présence de ces couches d'éléments de renforcement ou raidisseurs complexifient la conception de ces zones des bourrelets du pneumatique. La présence d'une couche supplémentaire d'une part et son agencement par rapport notamment au retournement de l'armature de carcasse et à la tringle d'autre part conduisent à une conception nécessitant des mélanges caoutchouteux pour séparer les extrémités de couches et assurer le positionnement souhaité des différentes extrémités.

L'armature de sommet est constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques. Elle peut également comprendre une couche de fils ou câbles métalliques à faible extensibilité faisant avec la direction circonférentielle un angle compris entre 45° et 90°, cette couche, dite de triangulation, étant radialement située entre l'armature de carcasse et la première couche de sommet dite de travail, formées de fils ou câbles parallèles présentant des angles au plus égaux à 45° en valeur absolue. La couche de triangulation forme avec au moins ladite couche de travail une armature triangulée, qui présente, sous les différentes contraintes qu'elle subit, peu de déformations, la couche de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Les inventeurs se sont donnés pour mission de proposer des pneumatiques pour ce type d'application présentant une masse réduite et des coûts de fabrication inférieurs.

Il est ainsi connu de réaliser l'armature de carcasse avec deux couches constituées d'éléments de renforcement en textile.

Le document WO 97/27070 décrit un pneumatique dont l'armature de carcasse est constituée de deux couches, chacune étant retournée autour d'une tringle dans chacun des bourrelets. Afin de permettre un décalage radial des extrémités des retournements, les semi-finis correspondants à chacune des couches d'armature de carcasse présentent des dimensions différentes. Outre, la nécessité de multiplier les semi-finis, la fabrication d'un tel pneumatique implique un dispositif complexe permettant la pose de deux couches d'armature de carcasse différentes.

Le document EP 1 792 752 décrit un pneumatique dont l'armature de carcasse est constituée de deux couches, une seule étant retournée autour d'une tringle dans chacun des bourrelets. La deuxième couche vient couvrir chacun des retournements de la première couche dans les zones des bourrelets. Avec une telle conception, il n'y a pas de problèmes de proximité des extrémités de retournement mais les performances d'endurance de la couche d'armature de carcasse axialement la plus extérieure est plus délicate dans certains types d'usage, notamment du fait des charges portées.

Le document WO 97/27070 décrit un pneumatique dont l'armature de carcasse est constituée de deux couches associées à une troisième plus courte venant brider l'ensemble sur la tringle nécessitant des couches semi-finis de tailles différentes et un procédé de fabrication relativement complexe.

Le document EP 1 162 087 décrit un pneumatique dont l'armature de carcasse peut être constituée de deux couches, chacune étant retournée autour des tringles.

Les documents WO 2009/092648 et EP 3 031 630 décrivent des pneumatiques d'avion dont la structure de carcasse est constituée de plusieurs couches d'éléments de renforcement textiles.

Un but de l'invention est de fournir des pneumatiques pour véhicules de type "petits Poids-Lourds", allégés par rapport à des pneumatiques réalisés avec une couche d'armature de carcasse métallique, de conception moins complexe que les solutions évoquées précédemment et, tout en assurant des performances des pneumatiques satisfaisantes notamment en termes d'endurance.

Ce but est atteint selon l'invention par un pneumatique pour véhicule, à armature de carcasse radiale, comprenant une armature de sommet, elle-même coiffée radialement d'une bande de roulement, ladite bande de roulement étant réunie à deux bourrelets, comportant une tringle, par l'intermédiaire de deux flancs, ladite armature de carcasse étant constituée de deux couches d'éléments de renforcement textiles, une première couche d'armature de carcasse étant ancrée dans chacun des bourrelets par retournement autour d'une tringle pour former une partie principale de la première couche d'armature de carcasse s'étendant d'une tringle à l'autre et un retournement de la première couche d'armature de carcasse dans chacun des bourrelets, les extrémités du retournement de ladite première couche d'armature de carcasse étant radialement extérieure au point radialement le plus extérieur de la tringle dans chaque bourrelet, la deuxième couche d'armature de carcasse s'étendant d'un bourrelet à l'autre et étant radialement extérieure à la première couche d'armature de carcasse dans la zone du sommet du pneumatique et, dans une coupe méridienne dudit pneumatique, dans chaque bourrelet,
- la droite d'orientation axiale passant par le centre géométrique de la tringle présentant un unique point d'intersection avec la deuxième couche d'armature de carcasse, ledit unique point d'intersection étant axialement extérieur au point axialement le plus extérieur de la tringle,
- la distance entre l'extrémité du retournement de la première couche d'armature de carcasse et le centre géométrique de la tringle étant supérieure à la largeur de la tringle et inférieure à 30 mm,
- l'extrémité de ladite deuxième couche d'armature de carcasse étant axialement intérieure au centre géométrique de la tringle.

Au sens de l'invention, une armature de carcasse radiale signifie que les éléments de renforcement des couches d'armature de carcasse sont dans un plan moyen formant un angle avec un plan radial inférieur ou égal à 10°, les deux plans étant sécants selon un axe perpendiculaire à l'axe de rotation.

La distance entre l'extrémité du retournement de la première couche d'armature de carcasse et le centre géométrique de la tringle et les différents positionnements relatifs à la définition de l'invention sont mesurées ou déterminés sur une coupe d'un pneumatique, l'écartement des bourrelets étant le même que lorsque le pneumatique est monté sur la jante de montage préconisée par l'ETRTO, celui-ci étant donc ni monté ni gonflé.

Au sens de l'invention, la largeur de la tringle est définie comme étant égale au diamètre du cercle circonscrit à la tringle, c'est-à-dire le plus petit cercle comprenant la géométrie de la tringle.

Avantageusement selon l'invention, la première couche d'armature de carcasse étant constituée d'une partie principale s'étendant d'une tringle à l'autre et d'un retournement, l'extrémité dudit retournement est axialement extérieure à ladite partie principale.

Avantageusement selon l'invention, le point d'intersection entre la deuxième couche d'armature de carcasse et la droite d'orientation axiale passant par le centre géométrique de la tringle est axialement extérieur au point d'intersection entre le retournement de la première couche d'armature de carcasse et la droite d'orientation axiale passant par le centre géométrique de la tringle. Le retournement de la première couche d'armature de carcasse est alors axialement positionné entre la partie principale de la première couche d'armature de carcasse et la deuxième couche d'armature de carcasse.

Avantageusement encore selon l'invention, la deuxième couche d'armature de carcasse est la seule couche d'éléments de renforcement présente radialement à l'extérieur de l'extrémité du retournement de la première couche d'armature de carcasse et axialement entre la surface extérieure du pneumatique et la partie principale de la première couche d'armature de carcasse.

Selon un mode de réalisation préféré de l'invention, dans chaque bourrelet, les extrémités de ladite deuxième couche d'armature de carcasse sont radialement intérieures au centre géométrique de la tringle et de préférence encore radialement intérieures au point radialement le plus intérieur de la tringle.

Avantageusement selon l'invention, le ratio de la longueur de couplage entre la première couche d'armature de carcasse et la deuxième couche d'armature de carcasse sur la largeur de la tringle est compris entre 2 et 5.

La longueur de couplage entre les couches d'armature de carcasse est mesurée selon l'abscisse curviligne de l'interface entre les deux couches d'armature de carcasse entre l'extrémité du retournement de la première couche d'armature de carcasse et l'extrémité de la deuxième couche d'armature de carcasse.

Le pneumatique ainsi défini selon l'invention peut équiper des véhicules de type petit poids lourd et présente une masse réduite par rapport aux pneumatiques usuels à une armature de carcasse métallique et, comportant par exemple des couches d'éléments de renforcement supplémentaires de type raidisseurs, avec des performances en termes d'endurance, et notamment en termes d'endurance des zones des bourrelets, au moins aussi bonnes que celles des pneumatiques plus usuels.

L'utilisation de deux couches d'armature de carcasse d'éléments de renforcement textiles réalisées pour constituer la carcasse conformément à l'invention, permet, tout en satisfaisant les critères de conception de tels pneumatiques que sont notamment les performances en matière d'endurance, du fait des matériaux et de la structure du pneumatique de proposer un pneumatique plus léger que les pneumatiques usuels.

La limitation de l'armature de carcasse à deux couches d'éléments de renforcement textiles permet de limiter la masse du pneumatique, notamment en comparaison d'une seule couche d'armature de carcasse constituée d'éléments de renforcement métallique.

En outre, l'absence de couche d'éléments de renforcement additionnelle de type raidisseur dans la zone du bourrelet contrairement aux pneumatiques plus usuels comportant une couche d'armature de carcasse constituée d'éléments de renforcement métalliques permet de simplifier la zone du bourrelet du pneumatique et conduit à un allègement par rapport aux pneumatiques plus usuels.

Les inventeurs ont par ailleurs mis en évidence que les pneumatiques selon l'invention conduisent à de performances en termes d'endurance nettement supérieures à celles des pneumatiques plus usuels comportant une couche d'armature de carcasse constituée d'éléments de renforcement métalliques. Les inventeurs expliquent ces résultats d'une part par la position de l'extrémité du retournement de la première couche d'armature de carcasse relativement proche de la tringle ; en effet, ladite extrémité du retournement de la première couche d'armature de carcasse peut ainsi être dans une zone en dehors de la zone du pneumatique qui vient en appui sur le crochet de jante lors des roulages et donc particulièrement sollicitée. Toutefois, la distance entre l'extrémité du retournement de la première couche d'armature de carcasse et le centre géométrique de la tringle étant supérieure à la largeur de la tringle, les risques de déroulement de la première couche d'armature de carcasse sont limités, notamment en cas de roulage sous fortes charges. D'autre part, le pneumatique selon l'invention, comme expliqué précédemment, ne nécessite pas de couche d'éléments de renforcement additionnelle de type raidisseur dans la zone du bourrelet contrairement aux pneumatiques plus usuels comportant une couche d'armature de carcasse constituée d'éléments de renforcement métalliques ; le bourrelet du pneumatique selon l'invention est ainsi conçue avec une épaisseur moins importante que celles des pneumatiques plus usuels comportant une couche d'armature de carcasse constituée d'éléments de renforcement métalliques et conduit ainsi à des échauffements moindres lors des roulages, et donc plus favorables aux performances d'endurance.

Les inventeurs ont encore su mettre en évidence que le positionnement de l'extrémité radialement intérieure de la deuxième couche d'armature de carcasse axialement à l'intérieur du centre géométrique de la tringle autorise un pincement de ladite deuxième couche d'armature de carcasse entre la tringle et la surface radialement intérieure du bourrelet et donc de la surface de la jante lors de roulages qui semble permettre de limiter les mises en compression des éléments de renforcement de la deuxième couche d'armature de carcasse. En effet, les inventeurs pensent avoir mis en évidence que les contraintes de mise en compression que subit la deuxième couche d'armature de carcasse lors des appuis sur le crochet de jante durant la rotation du pneumatique en roulage conduisent à une mise en compression des éléments de renforcement de la deuxième couche d'armature de carcasse très limitée, ceux-ci étant préalablement mis en extension lors du gonflage du pneumatique, leurs extrémités radialement intérieures étant bridées entre la tringle et la surface du « seat » de jante. En outre, la longueur du couplage entre la première couche d'armature de carcasse et la deuxième couche d'armature de carcasse favorise encore la diminution des risques de déroulement de la première couche d'armature de carcasse notamment en cas de roulages sous fortes charges.

Selon un mode de réalisation préféré de l'invention, les éléments de renforcement des deux couches d'armature de carcasse présentent un allongement à rupture supérieur ou égal à 7%.

De préférence, les éléments de renforcement des deux couches d'armature de carcasse sont en polyester.

Chaque élément de renfort en polyester comprend un ou plusieurs brins multifilamentaire en polyester, assemblés ensemble. Chaque brin, ou filé, comprend plusieurs monofilaments élémentaires en polyester, typiquement plusieurs dizaines à plusieurs centaines, et présentant un diamètre généralement inférieur à 35 µm.

Par monofilament en polyester, on rappelle de manière bien connue qu'il s'agit d'un monofilament de macromolécules linéaires formées de groupes liés entre eux par des liaisons esters. Les polyesters sont fabriqués par polycondensation par estérification entre un diacide carboxylique, ou de l'un de ses dérivés, et un diol. Par exemple, le polyéthylène téréphtalate peut être fabriqué par polycondensation de l'acide téréphtalique et de l'éthylène glycol.

Le polyester est avantageusement choisi parmi le polyéthylène téréphtalate, le polyéthylène naphthalate, le polybutylène téréphthalate, le polybutylène naphthalate, le polypropylène téréphthalate ou le polypropylène naphthalate. Selon un mode de réalisation préféré de l'invention, le polyester est du polyéthylène téréphtalate (PET).

Avantageusement selon l'invention, les éléments de renforcement des deux couches d'armature de carcasse sont identiques.

De tels choix d'éléments de renforcement des deux couches d'armature de carcasse vont permettre de limiter au mieux les coûts de fabrication des pneumatiques selon l'invention.

Selon une variante préférée de l'invention, le pneumatique est destiné à être monté sur une jante creuse (15° drop centre), pour être de préférence gonflé à une pression supérieure ou égale à 6 bars.

Au sens de l'invention, une jante creuse (15° drop center) ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

L'utilisation de telles jantes peut permettre de faciliter la conception du pneumatique pour éloigner l'extrémité du retournement de la première couche d'armature de carcasse de la zone du pneumatique qui vient en appui sur le crochet de jante lors des roulages.

Selon d'autres variantes de l'invention, le pneumatique est destiné à être monté sur une jante à seat plat, la pression de gonflage étant de préférence supérieure ou égale à 4 bars.

Selon un mode de réalisation préféré de l'invention, chaque bourrelet comprenant une première couche de mélange polymérique, prolongeant radialement vers l'extérieur la tringle et séparant le retournement de la première couche d'armature de carcasse de la partie principale de ladite première couche d'armature de carcasse, l'extrémité radialement extérieure de ladite première couche de mélange polymérique est radialement extérieure à l'extrémité du retournement de l'armature de carcasse.

De préférence selon ce mode réalisation, la distance entre l'extrémité radialement extérieure de la première couche de mélange polymérique et le centre géométrique de la tringle est supérieure à 2 fois la distance entre l'extrémité du retournement de la première couche d'armature de carcasse et le centre géométrique de la tringle. L'extrémité radialement extérieure de la première couche de mélange polymérique est ainsi avantageusement radialement extérieure à la zone qui vient en appui sur le crochet de jante lors de roulages. Avantageusement, la distance entre l'extrémité radialement extérieure de la première couche de mélange polymérique et le centre géométrique de la tringle est inférieure à la moitié de la différence entre le rayon du pneumatique mesuré dans le plan équatorial, le pneumatique étant monté et gonflé sur sa jante nominale à la pression recommandée, et le rayon le plus grand de ladite jante nominale, c'est-à-dire le rayon de la jante mesuré au point radialement le plus extérieur du crochet.

De préférence encore selon ce mode réalisation, pour contribuer encore à la limitation des risques de mise en compression des éléments de renforcement de la deuxième couche d'armature de carcasse, radialement entre l'extrémité du retournement de la première couche d'armature de carcasse et l'extrémité radialement extérieure de la première couche de mélange polymérique, la distance mesurée selon la direction axiale entre les éléments de renforcement de chacune des couches d'armature de carcasse est inférieure à 3 mm. Ladite distance est mesurée entre le point axialement le plus extérieur d'un élément de renforcement de la première couche d'armature de carcasse et le point axialement le plus intérieur de la deuxième couche d'armature de carcasse selon une direction sensiblement normale auxdits éléments de renforcement.

De préférence également, chaque bourrelet comprenant une deuxième couche de mélange polymérique, axialement intérieure au flanc et axialement extérieure à la deuxième couche d'armature de carcasse, l'extrémité radialement extérieure de ladite deuxième couche de mélange polymérique est radialement extérieure à l'extrémité du retournement de l'armature de carcasse et de préférence encore radialement intérieure à l'extrémité radialement extérieure de ladite première couche de mélange polymérique.

L'épaisseur maximum, mesurée selon la direction axiale, de ladite deuxième couche de mélange polymérique est avantageusement supérieure à 4 mm, pour permettre encore de limiter les risques de mise en compression des éléments de renforcement de la deuxième couche d'armature de carcasse. L'épaisseur maximum, mesurée selon la direction axiale, est encore avantageusement comprise entre 0.4 et 0.8 fois la largeur de la tringle.

Les différentes distances et les différents positionnements relatifs aux première et deuxième couches de mélange polymérique sont mesurées ou déterminés sur une coupe d'un pneumatique, l'écartement des bourrelets étant le même que lorsque le pneumatique est monté sur la jante de montage préconisée par l'ETRTO, celui-ci étant donc ni monté ni gonflé.

Avantageusement selon l'invention, pour favoriser encore les performances en termes d'endurance, les couches d'armature de carcasse étant constituées d'éléments de renforcement entre deux couches de calandrage formées de mélange caoutchouteux présentant un module sécant d'élasticité sous tension à 10 % d'allongement, respectivement notés Mc₁ pour la première couche d'armature de carcasse et Mc₂ pour la deuxième couche d'armature de carcasse, les modules sécants d'élasticité sous tension à 10 % d'allongement Mc₁, Mc₂ sont compris entre 2 et 15 Mpa.

Les modules sécants d'élasticité sous tension à 10 % d'allongement Mc₁, Mc₂ des couches de calandrage des deux couches d'armature de carcasse sont avantageusement égaux.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Les mesures de module des compositions de caoutchouc sont réalisées sur pneumatique neuf.

Selon un mode de réalisation avantageux de l'invention, la première couche de mélange polymérique présente un module sécant d'élasticité sous tension à 10 % d'allongement Mt compris entre 3 et 15 Mpa.

De préférence selon l'invention, pour favoriser encore les performances en termes d'endurance, le module sécant d'élasticité sous tension à 10 % d'allongement Mt de la première couche de mélange polymérique satisfait les relations suivantes :
- 0.3 x Mc_{1<} Mt < 3 x Mc₁,
- 0.3 x Mc_{2<} Mt < 3 x Mc₂.

Avantageusement également selon l'invention, la deuxième couche de mélange polymérique présente un module sécant d'élasticité sous tension à 10 % d'allongement Mj compris entre 3 et 15 Mpa.

De préférence selon l'invention, pour favoriser encore les performances en termes d'endurance, le module sécant d'élasticité sous tension à 10 % d'allongement Mj de la deuxième couche de mélange polymérique satisfait les relations suivantes :
- 0.3 x Mc_{1<} Mj < 3 x Mc₁,
- 0.3 x Mc_{2<} Mj < 3 x Mc₂.

Les modules sécants d'élasticité sous tension à 10 % d'allongement Mt de la première couche de mélange polymérique et Mj la deuxième couche de mélange polymérique sont avantageusement égaux.

Une variante de réalisation de l'invention prévoit encore, dans tout plan méridien, dans chaque bourrelet, que le pneumatique comporte une armature de contention entourant la tringle et un volume de mélange caoutchouteux directement au contact de la tringle. Avantageusement, l'armature de contention est une couche d'éléments de renforcement constitués de fibres en polyamide aliphatique, orientés sensiblement radialement. Une telle armature de contention est par exemple décrite dans le brevet EP 2370275.

Une telle couche de contention entourant la tringle et un volume de mélange caoutchouteux directement au contact de la tringle favorise également les performances d'endurance du pneumatique notamment lorsque le pneumatique est soumis à des charges portées très importantes et/ou de fortes pressions de gonflage en limitant notamment les phénomènes d'indentation de la première couche d'armature de carcasse par la tringle.

Avantageusement selon l'invention, la tringle est de type tressée de section circulaire.

D'autres détails et caractéristiques avantageux de l'invention ressortiront ci-après de la description des exemples de réalisation de l'invention en référence aux figures 1 à 3 qui représentent :
- figure1, une représentation schématique d'une vue en coupe d'un pneumatique selon l'invention,
- figure 2, une représentation schématique d'une vue en coupe agrandie d'un bourrelet du pneumatique de la figure 1,
- figure 3, une représentation schématique d'une vue en coupe d'un bourrelet selon une variante de réalisation d'un pneumatique selon l'invention.

Les figures ne sont pas représentées à l'échelle pour en simplifier la compréhension.

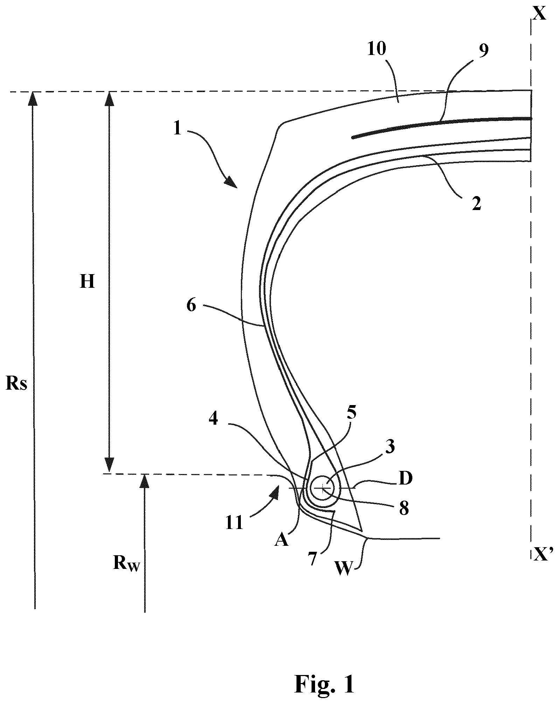

La figure 1 ne représente qu'une demi-vue d'un pneumatique qui se prolonge de manière symétrique par rapport à l'axe XX' qui représente le plan médian circonférentiel, ou plan équatorial, d'un pneumatique.

La figure 1 illustre une représentation schématique en coupe d'un pneumatique 1 de type petit poids lourd de dimension 215/75R17.5. Sur cette figure 1, est représentée l'armature de carcasse constituée d'une première couche 2 d'armature de carcasse enroulée autour d'une tringle 3 pour former un retournement 4 présentant une extrémité 5. Est également représentée une deuxième couche d'armature de carcasse 6 dont l'extrémité 7 est radialement intérieure et axialement intérieure au centre géométrique 8 de la tringle 3.

La tringle est une tringle tressée de diamètre égal à 9.2 mm.

Radialement à l'extérieur de l'armature de carcasse, on trouve une armature sommet 9 elle-même radialement surmontée de la bande de roulement 10.

Les couches d'armature de carcasse 2 et 6 sont constituées d'éléments de renforcement entre deux couches de calandrage formées de mélange caoutchouteux présentant des modules sécants d'élasticité sous tension à 10 % d'allongement, respectivement notés Mc₁ pour la première couche d'armature de carcasse et Mc₂ pour la deuxième couche d'armature de carcasse.

Les éléments de renforcement des deux couches d'armature de carcasse 2 et 6 sont des câbles PET (polyéthylène téréphtalate) de titre 334/2, dont la torsion est 270/270, et sont répartis avec un pas de 1.25 mm.

Le point d'intersection A entre la deuxième couche d'armature de carcasse 6 et la droite D d'orientation axiale passant par le centre géométrique 8 de la tringle 3 est axialement extérieur au point axialement le plus extérieur de la tringle et axialement extérieur au point d'intersection entre la droite D et le retournement 4 de la première couche d'armature de carcasse 2.

Les modules sécants d'élasticité sous tension à 10 % d'allongement Mc₁ de la première couche d'armature de carcasse 2 et Mc₂ de la deuxième couche d'armature de carcasse 6 sont identiques et égaux à 3.3 MPa.

La figure 1 illustre encore une jante W à seat coincé sur laquelle est mis en place le pneumatique. Cette jante W comporte un crochet de jante 11. Cette figure montre la hauteur H qui est la différence entre le rayon du pneumatique Rs, mesuré dans le plan équatorial XX' entre le point radialement le plus extérieur du pneumatique et l'axe de rotation du pneumatique, et le rayon du crochet de jante R_{w}, mesuré selon une direction radiale entre le point radialement le plus extérieur dudit crochet 11 de la jante W et l'axe de rotation du pneumatique.

La hauteur H est égale 150 mm.

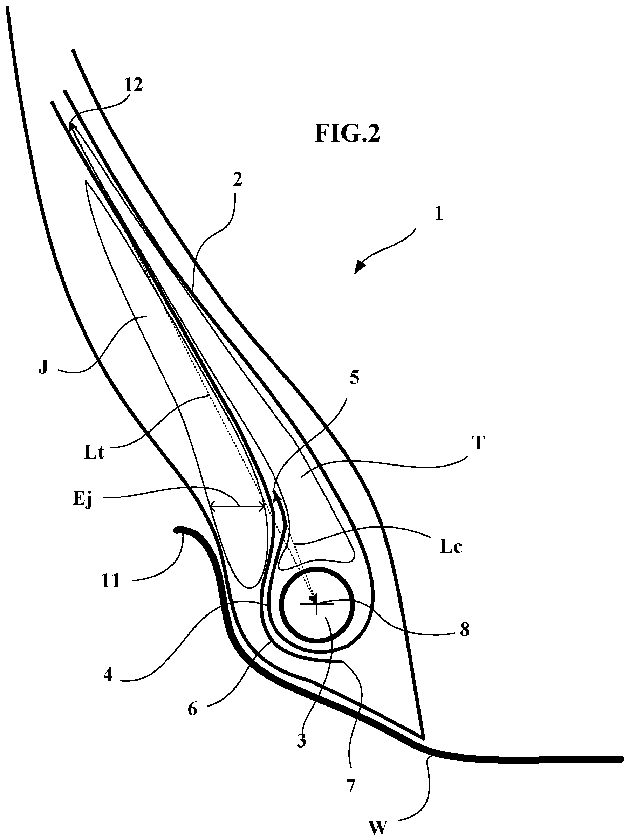

La figure 2 illustre de manière schématique une vue agrandie de la zone du bourrelet du pneumatique 1 de la figure 1.

Sur cette figure 2, on peut observer une première couche de mélange polymérique ou élément de remplissage T prolongeant radialement vers l'extérieur la tringle 3, constitué de mélange caoutchouteux présentant un module sécant d'élasticité sous tension à 10 % d'allongement Mt égal à 7.8 MPa.

Le bourrelet du pneumatique 1 comporte encore une deuxième couche de mélange polymérique ou élément de remplissage J, axialement intérieur au flanc et axialement extérieur à la deuxième couche d'armature de carcasse 6, constitué de mélange caoutchouteux présentant un module sécant d'élasticité sous tension à 10 % d'allongement Mj égal à 7.8 MPa.

Les modules Mt et Mj sont donc bien compris entre 0.3 et 3 fois les modules MC₁ et Mc₂, c'est-à-dire entre 0.99 et 9.9.

La distance Lc entre l'extrémité 5 du retournement de la première couche 2 d'armature de carcasse et le centre géométrique 8 de la tringle 3 est égale à 21 mm et donc inférieur à 30 mm.

La longueur Lt entre l'extrémité radialement extérieure 12 de la première couche de mélange polymérique T et le centre géométrique 8 de la tringle 3 est égale à 60 mm.

La longueur Lt est donc supérieure à 2 fois Lc et inférieure à la moitié de H.

L'épaisseur maximum Ej de la deuxième couche de mélange polymérique J est égale à 5.5 mm et comprise entre 0.4 et 0.8 fois la largeur de la tringle dont le diamètre est égale à 9.2 mm.

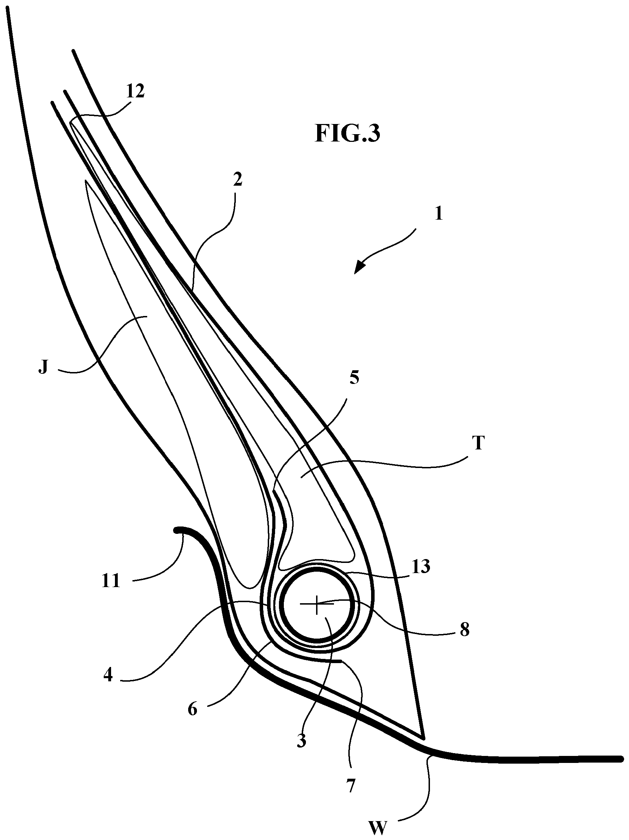

La figure 3 illustre une représentation schématique d'une vue en coupe de la zone d'un bourrelet d'une variante de réalisation d'un pneumatique selon l'invention. Cette variante de réalisation se distingue de la réalisation illustrée sur les figures 1 et 2 par la présence dans chaque bourrelet d'une armature de contention 13 entourant la tringle 3 et un volume de mélange caoutchouteux directement au contact de la tringle.

Des essais ont été réalisés avec des pneumatiques réalisés selon l'invention et d'autres avec des pneumatiques dits de référence.

Les pneumatiques I selon l'invention qui sont testés sont conformes à la représentation des figures 1 et 2.

Les pneumatiques de référence R sont des pneumatiques usuels de même dimension comportant une seule couche d'armature de carcasse retournée autour d'une tringle comportant des câbles métalliques de type 12.18 frettés et répartis avec un pas de 1.25 mm, et par la présence de raidisseurs dans chacun des bourrelets.

Des essais d'endurance ont été réalisés en faisant rouler deux pneus rabotés l'un sur l'autre avec une pression régulée de 6b, avec un gonflage à l'azote et une charge de 2465 daN à une vitesse de 65 km/h.

Les essais ont été réalisés pour les pneumatiques selon l'invention avec des conditions identiques à celles appliquées aux pneumatiques de référence.

Les essais réalisés conduisent pour les pneumatiques de référence R à des performances établissant la base 100. Les tests sont arrêtés lors de l'apparition d'une dégradation de la zone basse du pneumatique.

Les résultats des mesures sont présentés dans le tableau suivant. Ils sont exprimés en distance relative, une valeur de 100 étant attribuée au pneumatique R.

| Pneumatique R | Pneumatique I |
|---|---|
| 100 | 342 |

Les pneumatiques selon l'invention conduisent donc à des performances notamment en termes d'endurance satisfaisantes.

Les pneumatiques I selon l'invention autorisent par ailleurs un gain en masse de 10 % par rapport au pneumatique de référence R.

Le gain en masse est de 30 % si seules les parties bourrelets et carcasse sont considérées.

## Revendications

1. - Pneumatique (1) à armature de carcasse radiale, comprenant une armature de sommet (9), elle-même coiffée radialement d'une bande de roulement (10), ladite bande de roulement étant réunie à deux bourrelets, chaque bourrelet comportant une tringle (3), par l'intermédiaire de deux flancs, ladite armature de carcasse étant constituée de deux couches d'éléments de renforcement textiles, une première couche d'armature de carcasse (2) étant ancrée dans chacun des bourrelets par retournement autour de la tringle (3) pour former une partie principale de la première couche d'armature de carcasse (2) s'étendant d'une tringle (3) à l'autre et un retournement (4) de la première couche d'armature de carcasse dans chacun des bourrelets, les extrémités (5) desdits retournements (4) de ladite première couche d'armature de carcasse étant radialement extérieures au point radialement le plus extérieur de la tringle (3) dans chaque bourrelet, la deuxième couche d'armature de carcasse (6) s'étendant d'un bourrelet à l'autre et étant radialement extérieure à la première couche d'armature de carcasse (2) dans la zone du sommet du pneumatique, où, dans une coupe méridienne dudit pneumatique, dans chaque bourrelet,
- la droite d'orientation axiale (D) passant par le centre géométrique (8) de la tringle (3) présente un unique point d'intersection avec la deuxième couche d'armature de carcasse (6), ledit unique point d'intersection étant axialement extérieur au point axialement le plus extérieur de la tringle (3),
- l'extrémité (7) de ladite deuxième couche d'armature de carcasse (6) est axialement intérieure au centre géométrique (8) de la tringle (3), **caractérisé en ce que** la distance entre l'extrémité (5) du retournement (4) de la première couche d'armature de carcasse (2) et le centre géométrique (8) de la tringle (3) est supérieure à la largeur de la tringle (3) et inférieure à 30 mm, la largeur de la tringle (3) étant définie comme étant égale au diamètre du cercle circonscrit à ladite tringle (3).

2. - Pneumatique (1) selon la revendication 1, **caractérisé en ce que,** dans une coupe méridienne dudit pneumatique, dans chaque bourrelet, le point d'intersection entre la deuxième couche d'armature de carcasse (6) et la droite d'orientation axiale (D) passant par le centre géométrique (8) de la tringle (3) est axialement extérieur au point d'intersection entre le retournement (4) de la première couche d'armature de carcasse (2) et la droite d'orientation axiale (D) passant par le centre géométrique (8) de la tringle (3).

3. - Pneumatique (1) selon l'une des revendications 1 ou 2, **caractérisé en ce que,** dans une coupe méridienne dudit pneumatique, dans chaque bourrelet, les extrémités (7) de ladite deuxième couche d'armature de carcasse (6) sont radialement intérieures au centre géométrique (8) de la tringle (3) et de préférence radialement intérieures au point radialement le plus intérieur de la tringle (3).

4. - Pneumatique (1) selon l'une des revendications 1 à 3, **caractérisé en ce que** les éléments de renforcement des deux couches d'armature de carcasse (2, 6) présentent un allongement à rupture supérieur ou égal à 7%.

5. - Pneumatique (1) selon l'une des revendications précédentes, **caractérisé en ce qu'il** est destiné à être monté sur une jante (W) creuse de type 15° drop centre, pour être gonflé à une pression supérieure ou égale à 6 bars.

6. - Pneumatique (1) selon l'une des revendications précédentes, **caractérisé en ce que** chaque bourrelet comprend une première couche de mélange polymérique (T), prolongeant radialement vers l'extérieur la tringle (3) et séparant le retournement (4) de la première couche d'armature de carcasse de la partie principale de ladite première couche d'armature de carcasse (2)et **en ce que,** l'extrémité radialement extérieure (12) de ladite première couche de mélange polymérique (T) est radialement extérieure à l'extrémité (5) du retournement (4) de la première couche de l'armature de carcasse.

7. - Pneumatique (1) selon la revendication 6, **caractérisé en ce que,** dans une coupe méridienne dudit pneumatique, dans chaque bourrelet, la distance (Lt) entre l'extrémité radialement extérieure (12) de ladite première couche de mélange polymérique (T) et le centre géométrique (8) de la tringle (3) est supérieure à 2 fois la distance (Lc) entre l'extrémité (5) du retournement (4) de la première couche d'armature de carcasse et le centre géométrique (8) de la tringle (3) et de préférence, inférieure à la moitié de la différence (H) entre le rayon du pneumatique (Rₛ) mesuré dans le plan équatorial (XX'), le pneumatique étant monté et gonflé sur sa jante nominale à la pression recommandée, et le rayon (R_{w}) le plus grand de ladite jante nominale.

8. - Pneumatique (1) selon l'une des revendications 6 ou 7, **caractérisé en ce que,** dans une coupe méridienne dudit pneumatique, dans chaque bourrelet, radialement entre l'extrémité (5) du retournement (4) de la première couche d'armature de carcasse et l'extrémité radialement extérieure (12) de la première couche de mélange polymérique (T), la distance mesurée selon la direction axiale entre les éléments de renforcement de chacune des couches d'armature de carcasse (2, 6) est inférieure à 3 mm.

9. - Pneumatique (1) selon l'une des revendications précédentes, **caractérisé en ce que** chaque bourrelet comprend une deuxième couche de mélange polymérique (J), axialement intérieure au flanc et axialement extérieure à la deuxième couche d'armature de carcasse (6), **en ce que** l'extrémité radialement extérieure de ladite deuxième couche de mélange polymérique (J) est radialement extérieure à l'extrémité (5) du retournement (4) de la première couche de l'armature de carcasse et, de préférence, **en ce que** l'extrémité radialement extérieure de ladite deuxième couche de mélange polymérique (J) est radialement intérieure à l'extrémité (12) radialement extérieure de ladite première couche de mélange polymérique (T).

10. - Pneumatique (1) selon la revendication 9, **caractérisé en ce que,** dans une coupe méridienne dudit pneumatique, dans chaque bourrelet, l'épaisseur maximum (Ej), mesurée selon la direction axiale, de ladite deuxième couche de mélange polymérique (T) est avantageusement supérieure à 4 mm.

11. - Pneumatique (1) selon l'une des revendications précédentes, les couches d'armature de carcasse (2, 6) étant constituées d'éléments de renforcement entre deux couches de calandrage formées de mélange caoutchouteux présentant un module sécant d'élasticité sous tension à 10 % d'allongement, respectivement notés Mc₁ pour la première couche d'armature de carcasse (2) et Mc₂ pour la deuxième couche d'armature de carcasse (6), **caractérisé en ce que** les modules sécants d'élasticité sous tension à 10 % d'allongement Mc₁ et Mc₂ sont compris entre 2 et 15 MPa, les mesures de module étant effectuées en traction selon la norme AFNOR-NFT-46002 de septembre 1988.

12. - Pneumatique (1) selon la revendication 11, chaque bourrelet comprenant une première couche de mélange polymérique (T) prolongeant radialement vers l'extérieur la tringle (3) et séparant le retournement (4) de la première couche d'armature de carcasse de la partie principale de ladite première couche d'armature de carcasse (2), **caractérisé en ce que** le module sécant d'élasticité sous tension à 10 % d'allongement Mt de ladite première couche de mélange polymérique satisfait les relations suivantes :
- 0.3 x Mc_{1<} Mt < 3 x Mc₁,
- 0.3 x Mc_{2<} Mt < 3 x Mc₂.

13. - Pneumatique (1) selon l'une des revendications 11 ou 12, chaque bourrelet comprenant une deuxième couche de mélange polymérique (J) axialement intérieure au flanc et axialement extérieure à la deuxième couche d'armature de carcasse (6), **caractérisé en ce que** le module sécant d'élasticité sous tension à 10 % d'allongement Mj de la deuxième couche de mélange polymérique (J) satisfait les relations suivantes :
- 0.3 x Mc_{1<} Mj < 3 x Mc₁,
- 0.3 x Mc_{2<} Mj < 3x Mc₂

14. - Pneumatique (1) selon l'une des revendications précédentes, **caractérisé en ce que,** dans tout plan méridien, dans chaque bourrelet, le pneumatique comporte une armature de contention (13) entourant la tringle (3) et un volume de mélange caoutchouteux directement au contact de la tringle (3).

15. - Utilisation d'un pneumatique tel que décrit selon l'une des revendications 1 à 14 pour un véhicule de type petit poids lourd.

## Patentansprüche

1. Reifen (1) mit radialer Karkassenbewehrung, umfassend eine Scheitelbewehrung (9), die selbst radial von einem Laufstreifen (10) bedeckt ist, wobei der Laufstreifen mittels zweier Flanken mit zwei Wülsten verbunden ist, wobei jeder Wulst einen Wulstkern (3) aufweist, wobei die Karkassenbewehrung von zwei Schichten aus Textilverstärkungselementen gebildet ist, wobei eine erste Karkassenbewehrungsschicht (2) durch Umschlagen um den Wulstkern (3) in jedem der Wülste verankert ist, um einen Hauptabschnitt der ersten Karkassenbewehrungsschicht (2), der sich von einem Wulstkern (3) zum anderen erstreckt, und einen Umschlag (4) der ersten Karkassenbewehrungsschicht in jedem der Wülste zu bilden, wobei die Enden (5) der Umschläge (4) der ersten Karkassenbewehrungsschicht zum radial äußersten Punkt des Wulstkerns (3) in jedem Wulst radial außen liegen, wobei sich die zweite Karkassenbewehrungsschicht (6) von einem Wulst zum anderen erstreckt und zur ersten Karkassenbewehrungsschicht (2) im Bereich des Scheitels des Reifens radial außen liegt, wo, in einem Meridianschnitt des Reifens in jedem Wulst,
- die Gerade axialer Orientierung (D), die durch den geometrischen Mittelpunkt (8) des Wulstkerns (3) verläuft, einen einzigen Schnittpunkt mit der zweiten Karkassenbewehrungsschicht (6) aufweist, wobei der einzige Schnittpunkt zum axial äußersten Punkts des Wulstkerns (3) axial außen liegt,
- das Ende (7) der zweiten Karkassenbewehrungsschicht (6) zum geometrischen Mittelpunkt (8) des Wulstkerns (3) axial innen liegt, **dadurch gekennzeichnet, dass** der Abstand zwischen dem Ende (5) des Umschlags (4) der ersten Karkassenbewehrungsschicht (2) und dem geometrischen Mittelpunkt (8) des Wulstkerns (3) größer als die Breite des Wulstkerns (3) und kleiner als 30 mm ist, wobei die Breite des Wulstkerns (3) als gleich dem Durchmesser des Kreises festgelegt ist, der dem Wulstkern (3) umbeschrieben ist.

2. Reifen (1) nach Anspruch 1, **dadurch gekennzeichnet, dass** in einem Meridianschnitt des Reifens in jedem Wulst der Schnittpunkt zwischen der zweiten Karkassenbewehrungsschicht (6) und der Geraden axialer Orientierung (D), die durch den geometrischen Mittelpunkt (8) des Wulstkerns (3) verläuft, zum Schnittpunkt zwischen dem Umschlag (4) der ersten Karkassenbewehrungsschicht (2) und der Geraden axialer Orientierung (D), die durch den geometrischen Mittelpunkt (8) des Wulstkerns (3) verläuft, axial außen liegt.

3. Reifen (1) nach einem der Ansprüche 1 oder 2, **dadurch gekennzeichnet, dass** in einem Meridianschnitt des Reifens in jedem Wulst die Enden (7) der zweiten Karkassenbewehrungsschicht (6) zum geometrischen Mittelpunkt (8) des Wulstkerns (3) radial innen und vorzugsweise zum radial innersten Punkts des Wulstkerns (3) radial innen liegen.

4. Reifen (1) nach einem der Ansprüche 1 bis 3, **dadurch gekennzeichnet, dass** die Verstärkungselemente der zwei Karkassenbewehrungsschichten (2, 6) eine Reißdehnung größer als oder gleich 7 % aufweisen.

5. Reifen (1) nach einem der vorhergehenden Ansprüche, **dadurch gekennzeichnet, dass** er dazu bestimmt ist, auf einer hohlen Felge (W) vom Typ 15°-Drop-Center montiert zu sein, um auf einen Druck größer als oder gleich 6 bar aufgeblasen zu werden.

6. Reifen (1) nach einem der vorhergehenden Ansprüche, **dadurch gekennzeichnet, dass** jeder Wulst eine erste Polymermischungsschicht (T) umfasst, die den Wulstkern (3) radial nach außen verlängert und den Umschlag (4) der ersten Karkassenbewehrungsschicht vom Hauptabschnitt der ersten Karkassenbewehrungsschicht (2) trennt, und dadurch, dass das radial äußere Ende (12) der ersten Polymermischungsschicht (T) zum Ende (5) des Umschlags (4) der ersten Schicht der Karkassenbewehrung radial außen liegt.

7. Reifen (1) nach Anspruch 6, **dadurch gekennzeichnet, dass** in einem Meridianschnitt des Reifens in jedem Wulst der Abstand (Lt) zwischen dem radial äußeren Ende (12) der ersten Polymermischungsschicht (T) und dem geometrischen Mittelpunkt (8) des Wulstkerns (3) größer als das 2-fache des Abstands (Lc) zwischen dem Ende (5) des Umschlags (4) der ersten Karkassenbewehrungsschicht und dem geometrischen Mittelpunkt (8) des Wulstkerns (3) und vorzugsweise kleiner als die Hälfte der Differenz (H) zwischen dem Radius des Reifens (Rs), der in der Äquatorialebene (XX') gemessen wird, wobei der Reifen auf seiner Nennfelge montiert und auf den empfohlenen Druck aufgeblasen ist, und dem größten Radius (Rw) der Nennfelge ist.

8. Reifen (1) nach einem der Ansprüche 6 oder 7, **dadurch gekennzeichnet, dass** in einem Meridianschnitt des Reifens in jedem Wulst radial zwischen dem Ende (5) des Umschlags (4) der ersten Karkassenbewehrungsschicht und dem radial äußeren Ende (12) der ersten Polymermischungsschicht (T) der Abstand, der in der Axialrichtung zwischen den Verstärkungselementen jeder der Karkassenbewehrungsschichten (2, 6) gemessen wird, unter 3 mm beträgt.

9. Reifen (1) nach einem der vorhergehenden Ansprüche, **dadurch gekennzeichnet, dass** jeder Wulst eine zweite Polymermischungsschicht (J) axial innen zur Flanke und axial außen zur zweiten Karkassenbewehrungsschicht (6) umfasst, dadurch, dass das radial äußere Ende der zweiten Polymermischungsschicht (J) zum Ende (5) des Umschlags (4) der ersten Karkassenbewehrungsschicht radial außen liegt, und vorzugsweise dadurch, dass das radial äußere Ende der zweiten Polymermischungsschicht (J) zum radial äußeren Ende (12) der ersten Polymermischungsschicht (T) radial innen liegt.

10. Reifen (1) nach Anspruch 9, **dadurch gekennzeichnet, dass** in einem Meridianschnitt des Reifens in jedem Wulst die maximale Dicke (Ej), die in der Axialrichtung gemessen wird, der zweiten Polymermischungsschicht (T) vorteilhafterweise mehr als 4 mm beträgt.

11. Reifen (1) nach einem der vorhergehenden Ansprüche, wobei die Karkassenbewehrungsschichten (2, 6) von Verstärkungselementen zwischen zwei Kalandrierschichten gebildet sind, die aus Kautschukmischung gebildet sind, die ein Sekanten-Elastizitätsmodul unter Spannung bei 10 % Dehnung aufweisen, die für die erste Karkassenbewehrungsschicht (2) mit Mc₁ und für die zweite Karkassenbewehrungsschicht (6) mit Mc₂ bezeichnet sind, **dadurch gekennzeichnet, dass** die Sekanten-Elastizitätsmodule unter Spannung bei 10 % Dehnung Mc₁ und Mc₂ zwischen 2 und 15 MPa betragen, wobei die Modulmessungen unter Zug nach der Norm AFNOR-NFT-46002 vom September 1988 durchgeführt werden.

12. Reifen (1) nach Anspruch 11, wobei jeder Wulst eine erste Polymermischungsschicht (T) umfasst, die den Wulstkern (3) radial nach außen verlängert und den Umschlag (4) der ersten Karkassenbewehrungsschicht vom Hauptabschnitt der ersten Karkassenbewehrungsschicht (2) trennt, **dadurch gekennzeichnet, dass** der Sekanten-Elastizitätsmodul unter Spannung bei 10 % Dehnung Mt der ersten Polymermischungsschicht die folgenden Verhältnisse erfüllt:
- 0,3 x Mc₁ < Mt < 3 x Mc₁,
- 0,3 x MC_{2 <} Mt < 3 x Mc₂.

13. Reifen (1) nach einem der Ansprüche 11 oder 12, wobei jeder Wulst eine zweite Polymermischungsschicht (J) axial innen zur Flanke und axial außen zur zweiten Karkassenbewehrungsschicht (6) umfasst, **dadurch gekennzeichnet, dass** der Sekanten-Elastizitätsmodul unter Spannung bei 10 % Dehnung Mj der zweiten Polymermischungsschicht (J) die folgenden Verhältnisse erfüllt:
- 0,3 x Mc₁< Mj < 3 x Mc₁,
- 0,3 x Mc₂< Mj < 3 X MC₂

14. Reifen (1) nach einem der vorhergehenden Ansprüche, **dadurch gekennzeichnet, dass** in jeder Meridianebene in jedem Wulst der Reifen eine Begrenzungbewehrung (13), die den Wulstkern (3) umgibt, und ein Volumen der Kautschukmischung aufweist, das direkt in Kontakt mit dem Wulstkern (3) steht.

15. Verwendung eines Reifens, wie nach einem der Ansprüche 1 bis 14 beschrieben, für ein Fahrzeug vom Typ Kleinlastwagen.

## Claims

1. **-** Tyre (1) with radial carcass reinforcement, comprising a crown reinforcement (9), itself radially topped by a tread (10), said tread being joined to two beads, each bead including a bead core (3), by means of two sidewalls, said carcass reinforcement consisting of two plies of textile reinforcement elements, a first carcass reinforcement ply (2) being anchored in each of the beads by being turned up around the bead core (3) so as to form a main part of the first carcass reinforcement ply (2) extending from one bead core (3) to the other and a turn-up (4) of the first carcass reinforcement ply in each of the beads, the ends (5) of said turn-ups (4) of said first carcass reinforcement ply being radially outside the radially outermost point of the bead core (3) in each bead, the second carcass reinforcement ply (6) extending from one bead to the other and being radially outside the first carcass reinforcement ply (2) in the area of the crown of the tyre, wherein, in a meridian section of said tyre, in each bead,
- the axial orientation line (D) passing through the geometric centre (8) of the bead core (3) has a single intersection point with the second carcass reinforcement ply (6), said single intersection point being axially outside the axially outermost point of the bead core (3),
- the end (7) of said second carcass reinforcement ply (6) is axially inside the geometric centre (8) of the bead core (3), **characterized in that** the distance between the end (5) of the turn-up (4) of the first carcass reinforcement ply (2) and the geometric centre (8) of the bead core (3) is greater than the width of the bead core (3) and less than 30 mm, the width of the bead core (3) being defined as being equal to the diameter of the circle circumscribed at said bead core (3).

2. **-** Tyre (1) according to Claim 1, **characterized in that,** in a meridian section of said tyre, in each bead, the intersection point between the second carcass reinforcement ply (6) and the axial orientation line (D) passing though the geometric centre (8) of the bead core (3) is axially outside the intersection point between the turn-up (4) of the first carcass reinforcement ply (2) and the axial orientation line (D) passing through the geometric centre (8) of the bead core (3).

3. - Tyre (1) according to either Claim 1 or 2, **characterized in that,** in a meridian section of said tyre, in each bead, the ends (7) of said second carcass reinforcement ply (6) are radially inside the geometric centre (8) of the bead core (3) and preferably radially inside the radially innermost point of the bead core (3).

4. - Tyre (1) according to one of Claims 1 to 3, **characterized in that** the reinforcement elements of the two carcass reinforcement plies (2, 6) have an elongation at break greater than or equal to 7% .

5. - Tyre (1) according to one of the preceding claims, **characterized in that** it is intended to be mounted on a hollow rim (W) of the 15° drop centre type, to be inflated to a pressure greater than or equal to 6 bar.

6. - Tyre (1) according to one of the preceding claims, **characterized in that** each bead comprises a first ply of polymeric mix (T), extending the bead core (3) radially outwards and separating the turn-up (4) of the first carcass reinforcement ply from the main part of said first carcass reinforcement ply (2), and **in that** the radially outside end (12) of said first ply of polymeric mix (T) is radially outside the end (5) of the turn-up (4) of the first carcass reinforcement.

7. - Tyre (1) according to Claim 6, **characterized in that,** in a meridian section of said tyre, in each bead, the distance (Lt) between the radially outside end (12) of said first ply of polymeric mix (T) and the geometric centre (8) of the bead core (3) is greater than twice the distance (Lc) between the end (5) of the turn-up (4) of the first carcass reinforcement ply and the geometric centre (8) of the bead core (3), and preferably less than half the difference (H) between the radius (Rₛ) of the tyre measured in the equatorial plane (XX'), the tyre being mounted and inflated on its nominal rim to the recommended pressure, and the largest radius (R_{w}) of said nominal rim.

8. - Tyre (1) according to either of Claims 6 or 7, **characterized in that,** in a meridian section of said tyre, in each bead, radially between the end (5) of the turn-up (4) of the first carcass reinforcement ply and the radially outside end (12) of the first ply of polymeric mix (T), the distance measured along the axial direction between the reinforcement elements of each of the carcass reinforcement plies (2, 6) is less than 3 mm.

9. - Tyre (1) according to one of the preceding claims, **characterized in that** each bead comprises a second ply of polymeric mix (J), axially inside the sidewall and axially outside the second carcass reinforcement ply (6), **in that** the radially outside end of said second ply of polymeric mix (J) is radially outside the end (5) of the turn-up (4) of the first carcass reinforcement and preferably **in that** the radially outside end of said second ply of polymeric mix (J) is radially inside the radially outside end (12) of said first ply of polymeric mix (T).

10. - Tyre (1) according to Claim 9, **characterized in that,** in a meridian section of said tyre, in each bead, the maximum thickness (Ej), measured along the axial direction, of said second ply of polymeric mix (J) is advantageously greater than 4 mm.

11. - Tyre (1) according to one of the preceding claims, the carcass reinforcement plies (2, 6) consisting of reinforcement elements between two calendering plies made of rubber-like mix having a secant modulus of elasticity under tension at 10% elongation, respectively annotated Mc₁ for the first carcass reinforcement ply (2) and Mc₂ for the second carcass reinforcement ply (6), **characterized in that** the secant moduli of elasticity under tension at 10% elongation Mc₁, Mc₂ are between 2 and 15 MPa, the modulus measurements being taken in traction according to the standard AFNOR-NFT-46002 of September 1988.

12. - Tyre (1) according to Claim 11 each bead comprising a first ply of polymeric mix (T), extending the bead core (3) radially outwards and separating the turn-up (4) of the first carcass reinforcement ply from the main part of said first carcass reinforcement ply (2), **characterized in that** the secant modulus of elasticity under tension at 10% elongation Mt of the first ply of polymeric mix satisfies the following relations:
- 0.3 × Mc_{1<} Mt <3 × Mc₁,
- 0.3 x Mc₂< Mt < 3 x Mc₂.

13. - Tyre (1) according to either of Claims 11 or 12, each bead including a second ply of polymeric mix (J) axially inside the sidewall and axially outside the second carcass reinforcement (6), **characterized in that** the secant modulus of elasticity under tension at 10% elongation Mj of the second ply of polymeric mix (J) satisfies the following relations:
- 0.3 x Mc₁< Mj < 3 x Mc1,
- 0.3 x Mc₂< Mj < 3 x Mc₂.

14. - Tyre (1) according to one of the preceding claims, **characterized in that,** in any meridian plane, in each bead, the tyre includes a restraining reinforcement (13) surrounding the bead core (3) and a volume of rubber-like mix directly in contact with the bead core (3).

15. - Use of a tyre such as described, according to one of Claims 1 to 14 for a light truck type of vehicle.
